**Europäisches Patentamt**

**European Patent Office**

**Office européen des brevets**

(19)

(11) Numéro de publication: **0 026 129**
**B1**

(12) **FASCICULE DE BREVET EUROPEEN**

(45) Date de publication du fascicule du brevet: **27.07.83**

(51) Int. Cl.³: **H 04 N 9/31, H 04 N 5/74**

(21) Numéro de dépôt: **80401284.7**

(22) Date de dépôt: **09.09.80**

(54) **Dispositif de projection d'images en couleurs sur un écran; et système de visualisation comprenant un tel dispositif.**

(30) Priorité: **21.09.79 FR 7923599**

(43) Date de publication de la demande:
**01.04.81 Bulletin 81/13**

(45) Mention de la délivrance du brevet:
**27.07.83 Bulletin 83/30**

(84) Etats contractants désignés:
**AT BE CH DE GB IT LI LU NL SE**

(56) Documents cités:
**FR - A - 2 284 237**
**US - A - 3 912 386**
**US - A - 4 031 542**

(73) Titulaire: **THOMSON-CSF**
**173, Boulevard Haussmann**
**F-75379 Paris Cedex 08 (FR)**

(72) Inventeur: **Hareng, Michel**
**"THOMSON-CSF" - SCPI 173, Bld Haussmann**
**F-75360 Paris Cedex 08 (FR)**
Inventeur: **Le Berre, Serge**
**"THOMSON-CSF" - SCPI 173, Bld Haussmann**
**F-75360 Paris Cedex 08 (FR)**
Inventeur: **Leclerc, Pierre**
**"THOMSON-CSF" - SCPI 173, Bld Haussmann**
**F-75360 Paris Cedex 08 (FR)**

(74) Mandataire: **Wang, Pierre et al,**
**THOMSON-CSF SCPI 173, Bld Haussmann**
**F-75379 Paris Cedex 08 (FR)**

Dispositif de projection d'images en couleurs sur un ecran, et systeme de visualisation
comprenant un tel dispositif

La présente invention se rapporte aux dispositifs de projection d'images en couleurs sur un écran qui permettent à partir d'une cellule de visualisation de petites dimensions d'obtenir une image de la grandeur désirée susceptible d'être observée à l'oeil nu dans de bonnes conditions. Elle concerne également les systèmes de visualisation qui comprennent un tel dispositif.

Il est connu par le document US—A— 4 031 542 d'exciter optiquement un écran au moyen d'un tube cathodique émettant un rayonnement de courte longueur d'onde. L'écran comporte un réseau de bandes luminophores photoexcitées sélectivement pour réaliser la synthèse additive d'une image agrandie de télévision en couleurs. Ce dispositif est limité en puissance lumineuse du fait que les bandes lumionphores ne peuvent que convertir l'énergie rayonnée par le tube cathodique. Il est également connu par le document US—A— 3 912 386 de projeter une image en couleur au moyen d'une valve de lumière à photoconducteur qui renvoie le rayonnement produit par une source lumineuse locale. Des filtres colorés placés dans le plan de Fourier d'un système optique de Schlieren assurent la synthèse additive en fonction d'un codage par réseaux diffractants des images primaires projetées sur la valve de lumière.

On sait réaliser des dispositifs à base de cristaux liquides qui permettent de visualiser des informations diverses, notamment des images de télévision. Toutefois la taille de ces dispositifs est dans la plus part des cas limitée à une faible valeur, en raison des phénomènes thermiques utilisés dans ceux-ci. Un tel dispositif est par exemple décrit dans la demande de brevet français intitulé: "Dispositif de visualisation d'images, et système de télévision utilisant un tel dispositif" déposé le 5.5.1977 par la demanderesse sous le No. 77 13 738 et publié sous le numéro 2 389 955.

Dans ce dispositif on inscrit dans une couche de cristal liquide smectique, en utilisant un effet mixte thermique électrique, des images de télévision analysées sous la forme de lignes formant une trame. Chaque ligne est inscrite l'une après l'autre sous forme d'une structure plus ou moins diffusante le long de la ligne. L'effet utilisé permet de réaliser des dispositifs de petites dimensions qui permettent de projeter l'image ainsi inscrite dans le dispositif, sur un écran. Cette projection se fait le plus souvent par l'intermédiaire d'une optique dite de Schlieren qui permet de convertir les variations de pouvoir diffusant de la couche de cristal liquide en variations de luminosité de l'écran.

On a également décrit dans cette demande de brevet une variante de réalisation qui permet de visualiser une image en couleurs. Pour cela, on multiplie par trois le nombre initial de lignes, en affectant à chaque ligne de l'analyse de l'image un triplet de lignes contiguës. Une couche filtrante formée de lignes alternativement rouge, verte et bleue superposées aux lignes précédentes permet par une synthèse additive d'obtenir l'image en couleurs désirée.

L'image inscrite dans cette cellule de visualisation peut aussi bien être observée à une courte distance que projetée sur un écran, en couleurs dans les deux cas.

Dans le cas où l'on projette l'image sur un écran, ou peut également utiliser trois dispositifs distincts correspondant chacun à une primaire colorée et dont on projette les images en superposition sur un même écran. Cette solution est décrite dans le document FR—A— 2 284 237.

Dans un cas comme dans l'autre ces dispositifs sont plus onéreux qu'un dispositif en noir et blanc, et dans le cas de la projection à partir de trois dispositifs séparés le réglage est de plus très difficile.

Pour obtenir un dispositif de projection en couleurs fonctionnant sans réglages compliqués, et d'un prix de revient sensiblement égal à celui d'un dispositif en noir et blanc, l'invention propose un dispositif de projection d'images en couleurs sur un écran, du type comprenant une cellule de visualisation permettant d'afficher des images sous la forme de plusieurs trames formées de lignes parallèles entrelacées, une source lumineuse polychromatique permettant d'éclairer cette cellule, et des moyens permettant de projeter l'image de la cellule sur l'écran, les lignes de la cellule étant groupées en ensembles de lignes, chaque ligne d'un ensemble permettant de visualiser selon une gamme de gris allant du noir au blanc l'information correspondant à une couleur déterminée distincte, le dispositif comprenant en outre un filtre de couleur permettant de filtrer la lumière passant par chaque ligne de la cellule pour obtenir la couleur déterminée correspondante, lesdits moyens de projection comportant des moyens de focalisation du rayonnement polychromatique émis par ladite source et un diaphragme réalisant un filtrage spatial au point de convergence dudit rayonnement, afin de former une optique de Schlieren; caractérisé en ce que ledit filtre de couleur est extérieur à ladite cellule de visualisation et conjuguée optiquement avec celle-ci en étant située entre la source lumineuse et l'écran de projection.

D'autres particularités et advantages de l'invention apparaitront clairement dans la description suivante présentée à titre d'exemple non limitatif et faite en regard des figures annexées suivantes:

La figure 1 qui représente une première réalisation d'un dispositif selon l'invention;

La figure 2 qui représente une variante du dispositif de la figure 1;

La figure 3 qui représente une deuxième réalisation d'un dispositif selon l'invention.

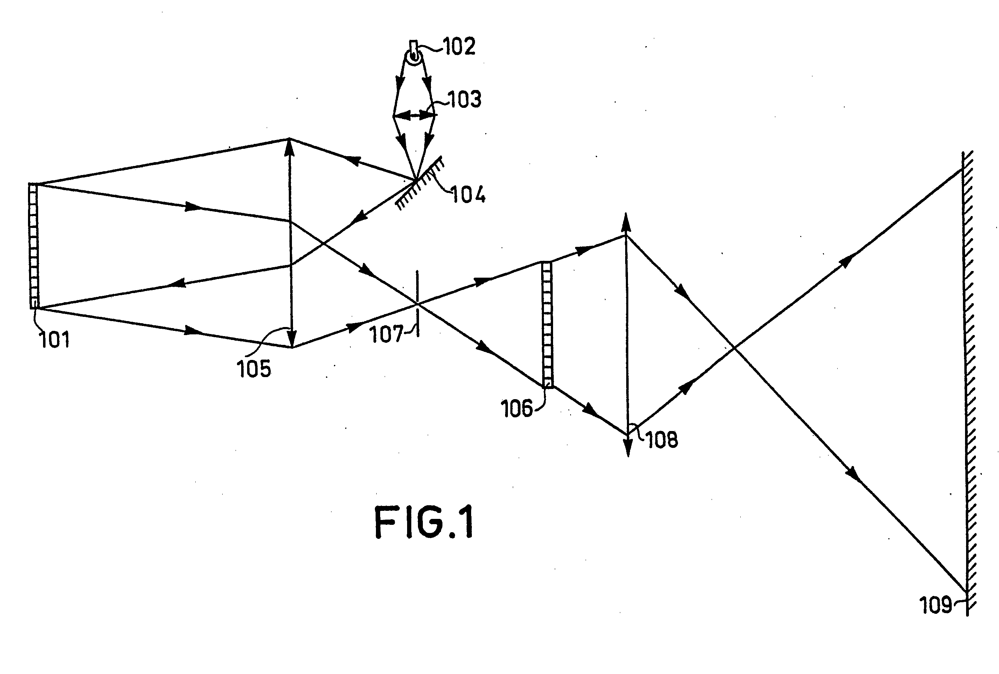

Dans un premier exemple d'un dispositif de projection selon l'invention représenté en figure 1, l'image à projeter est inscrite dans un dispositif de visualisation à cristal liquide 101, représenté d'une manière très simplifiée et comportant un ensemble de lignes formant une trame vue sur la figure par l'extrémité des lignes. Ce dispositif comporte trois fois plus de lignes qu'il n'y en a dans la trame selon laquelle l'image est analysée. Par un traitement électronique du signal vidéo qui représente l'image on sépare les trois composantes correspondant aux signaux rouge, vert et bleu, puis on affiche sur le dispositif 101 l'image sous la forme de triplets de lignes contigües correspondant chacune à une ligne de couleur différente comme dans le dispositif qui comporte en écran formé de lignes filtrantes colorées incorporées au dispositif. Toutefois ce dispositif 101 ne comporte p as ces lignes filtrantes et l'image qui est affichée est donc un image en noir et blanc.

Pour éclairer l'écran une source lumineuse 102 émet un faisceau de lumière qui est collecté par une première lentille 103 qui la focalise dans cet exemple au voisinage de la surface du miroir de renvoi 104. Ce miroir dirige le faisceau lumineux vers un objectif 105 qui permet tout d'abord d'illuminer la cellule 101 par un faisceau de lumière sensiblement parallèle et homogène.

La lumière est renvoyée par le dispositif de visualisation 101 vers l'objectif 105. Ce renvoi s'effectue de manière spéculaire par réflexion sur les électrodes de chauffage lorsque le cristal liquide n'est pas diffusant, et selon un lobe de forme variable suivant le cristal liquide utilisé et que nous considérerons comme sensiblement Lambertien pour les besoins de la description.

L'objectif 105 collecte la lumière renvoyée par le dispositif de visualisation 101 et en forme une image sur un filtre de couleur 106.

Dans leur passage entre l'objectif 105 et le filtre de couleur 106 les rayons réémis par le dispositif 101 de manière spéculaire passent par un point de focalisation situé au centre d'un diaphragme 107. Ce point correspond sensiblement à l'image de la source lumineuse 102 donnée par les éléments optiques 103, 104, 101 et 105.

La diaphragme 107 permet lui d'éliminer les rayons lumineux du lobe de rétrodiffusion correspondant au point où le cristal liquide est diffusant.

On réalise ainsi l'optique de Schlieren désirée pour obtenir un bon contraste.

Le filtre de couleur 106 sur lequel se forme l'image du dispositif 101 forme un filtre coloré composé de bandes correspondant aux lignes du dispositif 101. Ainsi l'image de chaque ligne du dispositif 101 vient se superposer à l'une des bandes du filtre de couleur 106. Ces bandes sont colorées en rouge, vert et bleu et sont groupées de manière à former des triplets correspondant aux triplets définis plus haut dans le dispositif de visualisation 101. Ainsi la lumière réémise en noir et blanc par une ligne d'un triplet du dispositif 101 est filtrée par la bande correspondante du filtre de couleur 106, ce que la colore selon la primaire correspondante. L'image du dispositif 101 formée dans le plan du filtre de couleur 106 est donc vue en couleurs par transparence à travers ce filtre de couleur.

Un objectif de projection 108 permet alors de projeter sur un écran 109 l'image colorée par le filtre de couleur 106.

Il est aisé d'obtenir ce filtre de couleur sous la forme d'une diapositive 106 en photographiant une image colorée de grandes dimensions reproduisant les bandes filtrantes nécessaires. Le dessin de cette image de grandes dimensions ne présentera aucune difficulté. Pour la photographier on pourra utiliser par exemple un banc-titre de reproduction qui permettra d'obtenir une distorsion négligeable. On pourra même, dans le cas où l'on désire utiliser un dispositif optique plus simple pour réaliser cette diapositive, tenir compte des distorsions introduites par celui-ci- en les compensant lors du dessin de l'image à grande échelle.

Le filtre de couleur 106 peut également être disposé sur la faisceau d'éclairage du dispositif 101. Il faut pour cela que l'optique qui permet d'éclairer le dispositif 101 forme à la surface de celui-ci une image du filtre de couleur 106 de manière que les lignes du dispositif soient éclairées par les bandes correspondantes.

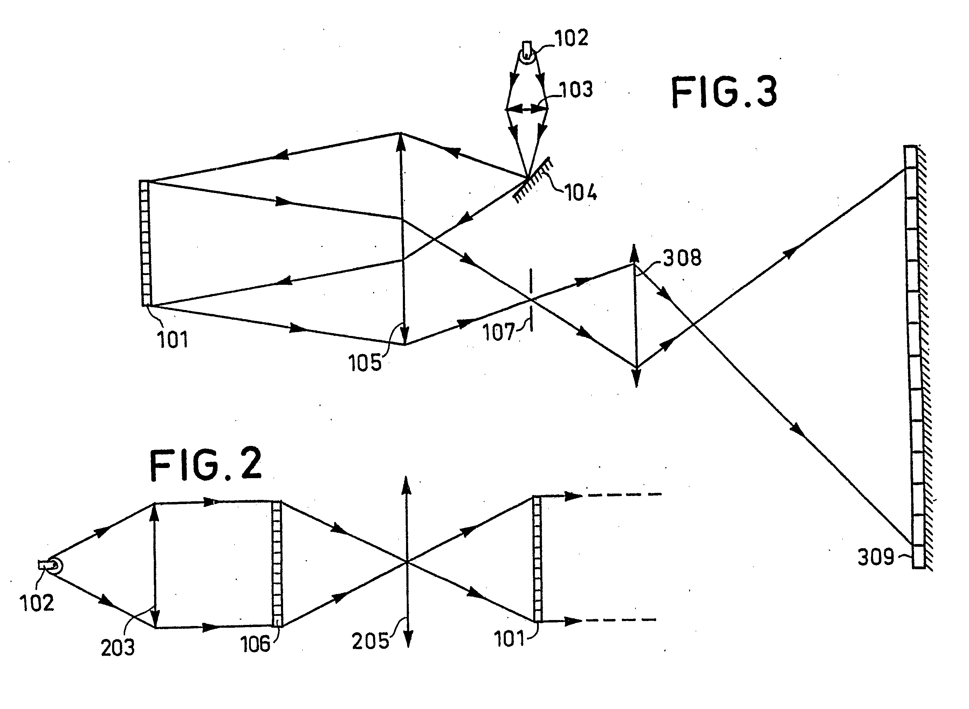

Une variante de réalisation utilisant cet emplacement du filtre de couleur 106, ainsi qu'un dispositif 101 destiné à être utilisé par transparence, est représentée en figure 2 de manière partielle.

Une source 102 éclaire par un faisceau de lumière parallèle obtenu à l'aide d'une lentille 203 le filtre de couleur 106. Un objectif 205 forme l'image du filtre de couleur 106 sur la face arrière du dispositif de visualisation 101 de telle manière que l'image des bandes colorées du filtre de couleur 106 coincide avec les lignes de visualisation du dispositif.

Ces lignes de visualisation sont ainsi éclairées par la lumière de couleur correspondant à celle qu'il est nécessaire de visualiser et on peut images l'autre face du dispositif 101 sur un écran de visualisation. Le dispositif optique nécessaire pour former cette image comprend par exemple un objectif de projection et un diaphragme pour former un optique de Schlieren.

Dans une autre variante de réalisation représentée en figure 3 le système est identique à celui représenté en figure 1 depuis la source de lumière 102 jusqu'au diaphragme 107 inclus. Mais au lieu de former une image intermédiaire sur un filtre de couleur et de reprendre cette image intermédiaire pour la projeter sur un écran blanc, on projete dans l'exemple illustré par la figure 3 directement l'image par l'inter- mediaire d'un objectif de projection 308 sur un écran spécialement coloré 309. Cet écran est coloré selon une série de bandes rouge, vert, bleu formant des triplets de manière semblable au filtre de couleur 106. Ces bandes sont disposées sur l'écran de manière à ce que les images des lignes de visualisation de dispositif 101 se forment sur elles. De cette manière chaque bande éclairée en lumière blanche réfléchit seulement la couleur correspondant à la ligne qui sert à l'éclairer. La coloration de l'image s'effectue ainsi directement au niveau de l'écran. Dans un autre mode de réalisation, où la cellule 101 est située plus près de l'objectif 105, celui-ci permet de projeter directement l'image sur l'écran.

Ces dispositifs de projection d'images en couleurs sur un écran peuvent s'appliquer à tous les systèmes de visualisation où l'on désire disposer d'une image de taille respectivement grande à partir d'une cellule de visualisation de faible dimension. On remarque en particulier que l'écran 309 de la figure 3 peut être observé aussi bien par transparence que par réflexion. Dans le cas où on l'observe par transparence le dispositif tout entier peut être enfermé dans un coffret et on aura alors l'équivalent d'un système de visualisation muni d'un tube cathodique. L'analogie visuelle avec le système des tubes dits autoconvergents à cathodes alignées montre que la qualité de l'image de ce système est très bonne.

On remarque enfin que dans le cas où l'écran 309 est transparent et observé par derrière, l'ensemble du dispositif de la figure 3 est équivalent à la partie du dispositif de la figure 1 limitée au système se terminant par le filtre de couleur.

### Revendications

1. Dispositif de projection d'images en couleurs sur un écran (109, 309), du type comprenant une cellule de visualisation (101) permettant d'afficher des images sous la forme de plusieurs trames formées de lignes parallèles entrelacées, une source lumineuse polychromatique (102) permettant d'éclairer cette cellule, et des moyens (108, 308) permettant de projeter l'image de cette cellule sur l'écran, les lignes de la cellule étant groupées en ensembles de lignes, chaque ligne d'un ensemble permettant de visualiser selon une gamme de gris allant du noir au blanc l'information correspondant à une couleur déterminée distincte, le dispositif comprenant en outre un filtre de couleur (106) permettant de filtrer la lumière passant par chaque ligne de la cellule pour obtenir la couleur dégerminée correspondante; lesdits moyens de projection comportant des moyens de focalisation (105) du rayonnement polychromatique émis par ladite source et un diaphragme (107) réalisant un filtrage spatial au point de convergence dudit rayonnement, afin de former une optique de Schlieren; caractérisé en ce que ledit filtre de couleur (106) est extérieur à ladite cellule (101) de visualisation et conjugué optiquement avec celle-ci en étant situé entre la source lumineuse (102) et l'écran de projection (109, 309).

2. Dispositif selon la revendication 1, caractérisé en ce que ledit filtre de couleur (106) comprend un écran transparent formé de bandes filtrantes parallèles et situé en un point où se forme l'image réelle de la cellule (101) de visualisation; l'image des lignes coincidant avec les bandes.

3. Dispositif selon la revendication 2, caractérisé en ce que l'écran transparent est confondu avec l'écran de projection (309).

4. Dispositif selon la revendication 2, caractérisé en ce que l'emplacement où est placé l'écran transparent correspond à une emplacement où se forme une image réelle intermédiaire de la cellule de visualisation (101), et qu'il comprend en outre des moyens permettant de projeter l'image de l'écran transparent ainsi illuminé sur l'écran de visualisation (109, 309).

5. Dispositif selon la revendication 1, caractérisé en ce que le filtre de couleur (106) comprend un écran transparent formé de bandes filtrantes parallèles et situé entre le source lumineuse (102) et la cellule de visualisation (101), et des moyens (205) permettant de former l'image de cet écran transparent sur la cellule de visualisation (101); l'image des bandes coincidant avec les lignes de la cellule.

6. Dispositif selon la revendication 1, caractérisé en ce que le filtre de couleur (106) est confondu avec l'écran de projection (309), et que celui-ci comprend un ensemble de bandes rétrodiffusantes parallèles colorées; l'image des lignes sur cet écran coincidant avec ces bandes colorées.

### Patentansprüche

1. Vorrichtung zur Projektion von Farbbildern auf einen Schirm (109, 309) von Typ mit einer Zelle zur Sichtbarmachung (101), die as ermöglicht, Bilder in Form von mehreren Bildrastern zu zeigen, die aus parallelen, ineinander verschlungenen Linien gebildet sind, mit einer polychromatischen Lichtquelle (102), die die Beleuchtung dieser Zelle ermöglicht, und Einrichtungen (108, 308), die as ermöglichen, das Bild dieser Zelle auf den Schirm zu projizieren, wobei die Linien der Zelle in Linienanordnungen gruppiert sind und jede Linie einer Anordnung es ermöglicht, entsprechend einem Graubereich, der von Schwarz bis Weiß geht, die Information entsprechend einer bestimmten unterschiedlichen Farbe sichtbar zu machen, wobei die Vorrichtung im übrigen ein Farbfilter (106) umfaßt, das es ermöglicht, das durch jede Linie der Zelle gehende Licht zu filtern, um die bestimmte entsprechende Farbe zu erhalten; wobei diese Projektionseinrichtungen Fokalisierungsmittel (105) für die polychromatische durch diese Quelle ausgesandte Strahlung sowie eine Blende (107) umfassen, die eine räumliche Filterung am Konvergenzpunkt dieser Strahlung zur Bildung einer Schlierenoptik herebeiführt, dadurch gekennzeichnet, daß dieses Farbfilter (106) sich außerhalb der Sichtbarmachungszelle (101) befindet und optisch mit dieser gekoppelt ist, indem es zwischen der Lichtquelle (102) und dem Projektionsschirm (109, 309) angeordnet ist.

2. Vorrichtung nach Anspruch 1, dadurch gekennzeichnet, daß das Farbfilter (106) einen transparenten Schirm aus parallelen filtrierenden Streifen umfaßt, der an einer Stelle sich befindet, wo sich das reelle Bild der Sichtbarmachungszelle (101) befindet; wobei das Bild der Linie mit den Streifen zusammenfällt.

3. Vorrichtung nach Anspruch 2, dadurch gekennzeichnet, daß der transparente Schirm mit dem Projektionsschirm (309) zusammenfällt.

4. Vorrichtung nach Anspruch 2, dadurch gekennzeichnet, daß der Ort, wo der transparente Schirm angeordnet ist, einem Ort entspricht, wo sich ein reelles Zwischenbild der Sichtbarmachungszelle (101) bildet und daß im übrigen Einrichtungen vorgesehen sind, die es ermöglichen, das Bild des so beleuchteten transparenten Schirms auf den Sichtbarmachungsschirm (109, 309) zu werfen.

5. Vorrichtung nach Anspruch 1, dadurch gekennzeichnet, daß das Farbfilter (106) einen transparenten Schirm aus filtrierenden parallelen Streifen bzw. Bändern umfaßt und zwischen der Lichtquelle (102) und der Sichtbarmachungszelle (101) angeordnet ist; und daß Einrichtungen (205) es ermöglichen, das Bild dieses transparenten Schirms auf der Sichtbarmachungszelle (101) auszubilden; wobei das Bild der Streifen mit den Linien der Zelle zusammenfällt.

6. Vorrichtung nach Anspruch 1, dadurch gekennzeichnet, daß das Farbfilter (106) mit dem Projektionsschirm (309) zusammenfällt und daß dieses eine Gesamtanordnung paralleler farbiger rückstreuender Bänder umfaßt; wobei das Bild der Linien auf diesem Schirm mit den farbigen Bändern zusammenfällt.

**Claims**

1. Device for projecting of pictures in color upon a screen (109, 309) of the type comprising a visualizing cell (101) permitting to show pictures in form of a plurality of rasters formed of parallel interlaced lines, a source of polychromatic light (102) permitting to illuminate said cell, and means (108, 308) permitting to project the picture of said cell upon a screen, the lines of the cell being grouped in a units of lines, each line of a unit permitting to visualize, corresponding to a field of grey going from black to white, the information corresponding to a determined distinct color, the device comprising additionally a color filter (106) permitting to filter the light passing by each line of the cell to obtain the corresponding determined color; the projecting means comprising focalizing means (105) for the polychromatic radiation emitted by said source and a diaphragm (107) realizing a spatial filtration at the point of convergence of said radiation, in order to form a schlieren optique; characterized in that said color filter (106) being exterior of said visualizing cell (101) and optically associated to it by being situated between the light source (102) and the projecting screen (109, 309).

2. Device according to claim 1, characterized in that said color filter (106) comprises a transparent screen formed of filtering parallel bands situated at the point where the real picture of the visualizing cell (101) is formed; the picture of the lines coinciding with the bands.

3. Device according to claim 2, characterized by the transparent screen confounding with projecting screen (309).

4. Device according to claim 2, characterized in that the location where the transparent screen is arranged, corresponds to a location where a real intermediate picture of the visualizing cell (101) is formed and moreover characterized by means permitting to project the picture of the transparent screen illuminated in this way upon the visualizing screen (109, 309).

5. Device according to claim 1, characterized in that the color filter (106) corresponds to a transparent screen formed by filtering parallel bands, which screen is situated between the light source (102) and the visualizing cell (101), means (205) permitting to form the picture of that transparent screen upon the visualizing cell (101); the picture of the bands coinciding with the lines of the cell.

6. Device according to claim 1, characterized in that the color filter (106) confounds with the projecting screen (309), said color filter comprising a unit of retrodiffusing parallel colored bands; the picture of the lines on said screen coinciding with these colored bands.

FIG.1

FIG.3

FIG.2